Europäisches Patentamt

(19) European Patent Office

Office européen des brevets

(11) Veröffentlichungsnummer: **0 348 820 B1**

(12) **EUROPÄISCHE PATENTSCHRIFT**

(45) Veröffentlichungstag der Patentschrift:
28.08.91 Patentblatt 91/35

(51) Int. Cl.⁵: **B60N 2/02**

(21) Anmeldenummer: 89111376.3

(22) Anmeldetag: 22.06.89

(54) **Betätigungsvorrichtung für einen Fahrzeugsitz.**

(30) Priorität: 29.06.88 DE 3821952

(43) Veröffentlichungstag der Anmeldung:
03.01.90 Patentblatt 90/01

(45) Bekanntmachung des Hinweises auf die
Patenterteilung:
28.08.91 Patentblatt 91/35

(84) Benannte Vertragsstaaten:
**DE ES FR GB IT SE**

(56) Entgegenhaltungen:
DE-A- 2 836 004
DE-A- 3 639 827
US-A- 2 756 290
US-A- 3 135 839
US-A- 4 761 522

(73) Patentinhaber: **GEBR. ISRINGHAUSEN
An der Bega 58
W-4920 Lemgo 1 (DE)**

(72) Erfinder: **Granzow, Manfred, Dipl.-Ing.
Plass 7
W-4926 Dörentrup (DE)**
Erfinder: **Mischer, Hans-Peter, Dipl.-Ing.
Meinberger Strasse 15
W-4934 Horn-Bad Meinberg (DE)**
Erfinder: **Süss, Christian
Stiftweg 41
W 4902 Bad Salzuflen (DE)**

(74) Vertreter: **Lange, Gerd, Dipl.-Ing.
Nachtigallenweg 8 Postfach 2425
W-4950 Minden (DE)**

EP 0 348 820 B1

## Beschreibung

Die Erfindung betrifft eine Betätigungsvorrichtung für einen Fahrzeugsitz mit mehreren elektrisch und/oder pneumatisch zu betätigenden Verstellelementen.

Eine Betätigungsvorrichtung dieses Typs ist aus der DE-A-3517346 bekannt. Sie dient zum Betätigen von insgesamt 3 Verstellelementen (für die Neigungsverstellung der Rückenlehne, für die Höhenverstellung des Sitzes und für die Horizontalverschiebung des Sitzes), jedoch sind dafür insgesamt 3 als Einheit zusammengefaßte Betätigungsorgane notwendig, die in jedem Fall vor ihrer Betätigung jeweils eine eindeutige Bestimmung, z.B. durch Ertasten ihrer räumlichen Anordnung und/oder einer unterschiedlichen Oberflächenstruktur erfordern, damit das jeweils richtige Betätigungsorgan für das gewünschte Verstellelement erkannt, erfaßt und betätigt wird. Das ist nachteilig.

Weiterhin ist es nachteilig, daß die drei Betätigungsorgane der bekannten Betätigungsvorrichtung lediglich nur durch Zug in eine Richtung zu betätigen sind, so daß hierdurch bei dem jeweils zugeordneten Verstellelement immer nur eine Funktion auszulösen ist, z.B. Entarretieren einer im Ruhezustand arretierten Mechanik oder z.B. Öffnen eines im Ruhezustand geschlossenen pneumatischen Ventils. Für viele Anwendungsfälle solcher Fahrzeugsitz-Betätigungsvorrichtungen reicht dies nicht aus, da die heutigen modernen Komfortsitze, die elektromotorisch oder pneumatisch verstellt werden, pro Verstellmöglichkeit jeweils zwei Funktionen erfordern. Zum Beispiel muß bei einer elektromotorischen Höhenverstellung der Sitz wahlweise von unten nach oben und in umgekehrter Richtung von oben nach unten verstellbar sein, d.h. die Betätigungsvorrichtung muß allein schon für die elektromotorische Höhenverstellung des Sitzes zwei Funktionen auslösen können.

Aufgabe der Erfindung ist es, eine Betätigungsvorrichtung für Fahrzeugsitze zu schaffen, die mit nur einem Betätigungsorgan als sogenannte Monogriff-Betätigungsvorrichtung konstruiert ist, um das lästige Erkennen und Auswählen eines einzelnen von mehreren Betätigungsorganen zu vermeiden, und die dennoch in logischer Zuordnung zu den Verstellelementen eines Fahrzeugsitzes insgesamt mindestens 6 Funktionen auszulösen vermag.

Diese Aufgabe wird erfindungsgemäß dadurch gelöst, daß die Betätigungsvorrichtung einen Zentralblock aufweist, der zum Teil, d.h. mit einem ersten Teilstück in ein Befestigungsgehäuse und mit einem anderen Teil, d.h. mit einem zweiten Teilstück in ein Griffgehäuse hineinragt, wobei der Zentralblock auf einer Zentralblock-Achse gelagert ist, die in dem Befestigungsgehäuse angeordnet ist und auf der der Zentralblock relativ zum Befestigungsgehäuse in Achsrichtung verschiebbar und um die Zentralblock-Achse verschwenkbar ist, und das Griffgehäuse auf einer Griffgehäuse-Achse gelagert und um diese verschwenkbar ist, die an dem Zentralblock senkrecht zur Zentralblock-Achse befestigt ist, und wobei den jeweiligen Relativbewegungen, die das Griffgehäuse relativ zum Zentralblock und/oder der Zentralblock relativ zum Befestigungsgehäuse ausführen kann, jeweils ein elektrisches oder pneumatisches Schaltelement zugeordnet ist, die am Zentralblock einerseits und/oder an den Gehäusen (Griffgehäuse bzw. Befestigungsgehäuse) andererseits befestigt sind.

Eine besonders vorteilhafte Ausführungsform der Erfindung sieht vor, daß der Zentralblock im wesentlichen vollständig von dem Befestigungsgehäuse einerseits und von dem Griffgehäuse andererseits umschlossen ist, so daß der Zentralblock und die Schaltelemente innerhalb des Gehäuse-Umschlusses gegen Beschädigungen und Verschmutzung geschützt angeordnet sind und der Betätigungsvorrichtung insgesamt eine im wesentlichen geschlossene äußere ästethische Form gegeben werden kann.

Der Zentralblock ist wesentlicher Teil der neuen Betätigungsvorrichtung. Er trägt die Griffgehäuse-Achse und damit den einzigen Betätigungsgriff (= Monogriff) der Vorrichtung. Mittels des Monogriffes ist es problemlos möglich, den Zentralblock auf seiner Zentralblock-Achse innerhalb des Befestigungsgehäuses zu verschieben und zu verschwenken, wodurch wahlweise insgesamt in 4 Richtungen Relativbewegungen des Zentralblockes gegen das Befestigungsgehäuse ausgeführt werden können, die mittels elektrischer oder pneumatischer Schaltelemente abgetastet werden, indem die Schaltelemente in oder an der jeweiligen Bewegungsbahn angeordnet sind und die jeweils ausgeführte Relativbewegung in eine Schaltfunktion umsetzen.

Unabhängig von den Bewegungen des Zentralblockes relativ zum Befestigungsgehäuse kann der Monogriff relativ zum Zentralblock um seine Griffgehäuse-Achse verschwenkt werden. Hierdurch sind zwei weitere Schaltfunktionen gegeben, je nachdem ob der Monogriff in die eine oder andere Richtung verschwenkt wird.

Eine Weiterentwicklung der vorstehend beschriebenen Betätigungsvorrichtung ist dadurch gegeben, daß der Monogriff gegebenenfalls mit seiner Griffgehäuse-Achse relativ zum Zentralblock in Richtung der Griffgehäuse-Achse verschiebbar ist. Hierdurch sind zwei weitere Schaltfunktionen realisierbar, die z.B. für weniger häufig zu betätigende Verstellelemente gut nutzbar sind.

Bei allen konstruktiven Ausführungsformen der Erfindung können die elektrischen und/oder pneumatischen Schaltelemente, die die jeweilige Relativbewegung des Griffgehäuses zum Zentralblock und/oder des Zentralblockes zum Befestigungsgehäuse abtasten, entweder am Zentralblock oder an den jeweiligen Gehäusen (Befestigungsgehäuse, Griffgehäuse) befestigt sein.

Ist die Betätigungsvorrichtung mit pneumatischen Schaltelementen in Form von Auf/Zu-Ventilen ausgerüstet, dann sieht eine besonders zweckmäßige Ausführungsform der Erfindung vor, daß alle Schaltelemente in den Zentralblock integriert sind, indem dieser z.B. als vielfacher Ventilkörper mit inneren Druckluftverzweigungen gebohrt ist, so daß der Ventilkörper bzw. der Zentralblock lediglich eine Druckluftzuleitung benötigt und über die einzelnen Stößel der Auf/Zu-Ventile, die in die jeweilige Bewegungsbahn der Relativbewegungen vorstehen, die Durckluftabgänge zu den einzelnen pneumatisch zu betätigenden Verstellelementen des Fahrzeugsitzes gesteuert werden.

Nachfolgend wird ein Ausführungsbeispiel der Erfindung anhand der Zeichnungen näher beschrieben. Es zeigen :

Figur 1 in perspektivischer Darstellung eine erfindungsgemäße Betätigungsvorrichtung,

Figur 2-4 Querschnitte durch eine Betätigungsvorrichtung entsprechend Figur 1.

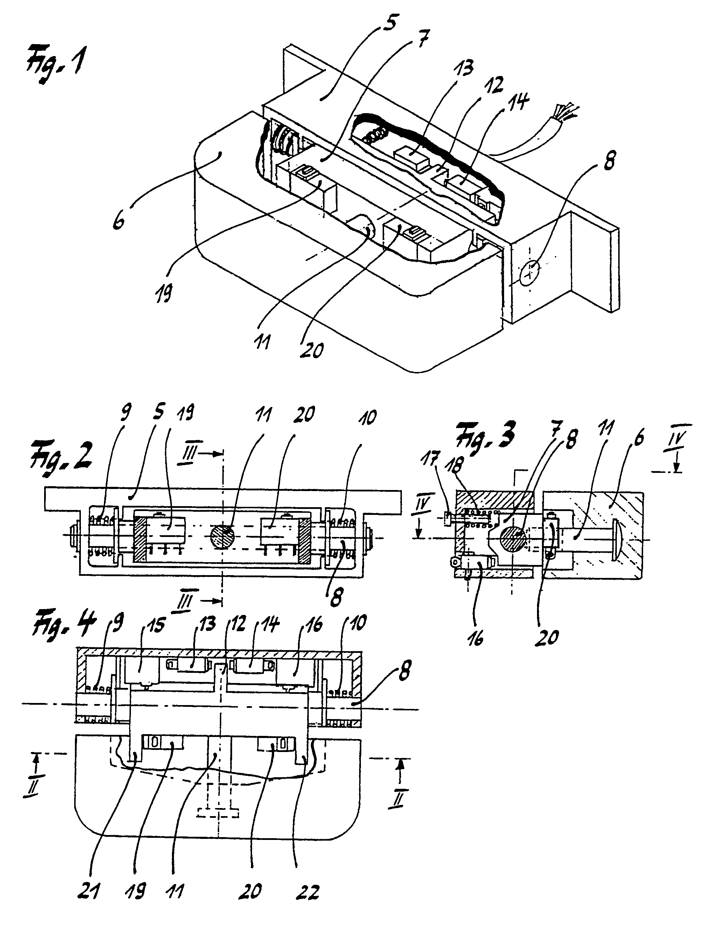

Die perspektivische Darstellung der Betätigungsvorrichtung gemäß Figur 1 zeigt das Befestigungsgehäuse 5, das Griffgehäuse 6 sowie den innerhalb der Gehäuse angeordneten Zentralblock 7.

Der Zentralblock 7 ist auf einer Achse 8 verschiebbar und verschwenkbar gelagert, die ihrerseits in dem Befestigungsgehäuse 5 in der äußeren Gehäusewandung gehalten ist. Figur 2 und Figur 4 zeigen dies genauer.

Der auf der Achse 8 angeordnete Zentralblock 7 ist in seiner mittigen Position (siehe Figur 2) mittels der beiden Zylinderfedern 9 und 10 gehalten und kann -wahlweise gegen den Druck einer der Federn 9 und 10 auf der Achse axial darstellungsgemäß nach rechts oder nach links verschoben werden.

Das axiale Verschieben des Zentralblockes erfolgt mittels des Griffgehäuses 6, das im folgenden als Monogriff benannt wird, da es das einzige Betätigungsorgan bzw. Griffstück ist, das die dargestellte Betätigungsvorrichtung aufweist.

Der Monogriff 6 ist mit dem Zentralblock 7 durch die Griffgehäuse-Achse 11 verbunden. Wird der Monogriff in Richtung seiner Längserstreckung, d.h. parallel zur Zentralblock-Achse 8 bewegt, dann betätigt der Zentralblock je nach seiner Bewegungsrichtung mittels seines vorstehenden Teils 12 entweder das Schaltelement 13 oder das Schaltelement 14, die jeweils an der Rückwand des Befestigungsgehäuses 5 montiert sind. Die Schaltelemente 13 und 14 steuern bei dem dargestellten Ausführungsbeispiel in logischer Zuordnung dasjenige Verstellelement des Fahrzeugsitzes, das die Horizontalverschiebung des Sitzes horizontal nach vorne oder nach hinten bewirkt.

Wird der Monogriff 6 in der Darstellung gemäß Figur 1 nach oben oder nach unten, d.h. quer zu seiner Längserstreckung bewegt, dann wird hierdurch der Zentralblock 7 um die Zentralblock-Achse 8 nach oben bzw. nach unten verschwenkt.

Diese Verschwenkbewegung wird durch die beiden Schaltelemente 15 und 16 abgetastet, die ebenfalls an dem Befestigungsgehäuse 5 ortsfest montiert sind und zwar einerseits oberhalb der Zentralblock-Achse 8 (Schaltelement 15, vergleiche Figur 4) und andererseits unterhalb der Zentralblock-Achse 8 (Schaltelement 16, vergleiche Figur 3 und Figur 4). Jedem dieser Schaltelemente ist jeweils eine Anschlagschraube 17 mit einer Druckfeder 18 zugeordnet (siehe Figur 3), die die Schwenkbewegung des Zentralblockes 7 in die eine oder andere Schwenkrichtung begrenzt und mittels der Druckfedern 18 eine mittige Schwenkbewegung-Ruheposition des Zentralblockes 8 gewährleistet.

Die vorgenannten Schaltelemente 15 und 16 steuern bei dem dargestellten Ausführungsbeispiel in logischer Zuordnung dasjenige Verstellelement des Fahrzeugsitzes, das die Höheneinstellung des Sitzes nach oben oder nach unten bewirkt.

Der Monogriff 6 kann weiterhin auch noch um seine Griffgehäuse-Achse 11 verschwenkt werden. In der Darstellung gemäß Figur 1 fluchtet er dann nicht mehr mit dem Befestigungsgehäuse 5 sondern neigt sich relativ zu diesem um einen Winkel nach oben oder nach unten. Dabei werden die Schaltelemente 19 oder 20 betätigt, die am Zentralblock 7 befestigt sind, jedoch in das Griffgehäuse 6 hineinragen, so daß sie beim Verschwenken des Monogriffes durch das Griffgehäuse betätigt werden.

In logischer Zuordnung steuern die Schaltelemente 19 und 20 bei dem dargestellten Ausführungsbeispiel dasjenige Verstellelement eines Fahrzeugsitzes, das die Sitzflächenneigung bewirkt.

Bei dem dargestellten Ausführungsbeispiel ragt der Zentralblock 8 mit zwei Außenkanten 21 und 22 in das Griffgehäuse des Monogriffes 6 hinein, so daß dieser beim Betätigen der Sitzflächenneigung, d.h. beim Verschwenken des Monogriffes 6 um seine Griffgehäuse-Achse 11 nicht überdreht werden kann. Für eine mittige Zentrierung des Monogriffes 6 auf seiner Griffgehäuse-Achse 11 kann eine Blattfeder o. dergl. (nicht dargestellt) vorgesehen sein.

Bei der vorbeschriebenen Betätigungsvorrichtung sind die Schaltelemente 13, 14, 15, 16, 19, 20 jeweils als elektrische Schaltkontakte für elektrisch zu betätigende Verstellelemente des Fahrzeugsitzes ausgebildet, jedoch können in gleicher Weise auch pneumatische Schaltventile für pneumatisch zu betätigende Sitz-Verstellelemente vorgesehen sein.

**Patentansprüche**

1. Betätigungsvorrichtung für einen Fahrzeugsitz

— mit mehreren elektrisch und/oder pneumatisch zu betätigenden Verstellelementen, dadurch gekennzeichnet,

— daß die Betätigungsvorrichtung einen Zentralblock (7) aufweist, der mit seinem einem Teilstück in ein Befestigungsgehäuse (5) und mit einem anderen Teilstück in ein Griffgehäuse (6) hineinragt,

— daß der Zentralblock (7) auf einer Zentralblock-Achse (8) gelagert ist, die in dem Befestigungsgehäuse (5) angeordnet ist und auf der der Zentralblock relativ zum Befestigungsgehäuse in Achsrichtung verschiebbar und um die Zentralblock-Achse verschwenkbar ist,

— daß das Griffgehäuse (6) auf einer Griffgehäuse-Achse (11) gelagert und um diese verschwenkbar ist, die an dem Zentralblock (7) senkrecht zur Zentralblock-Achse befestigt ist.

— und daß den jeweiligen Relativbewegungen des Griffgehäuses zum Zentralblock und/oder des Zentralblockes zum Befestigungsgehäuse elektrische oder pneumatische Schaltelemente zugeordnet sind, die am Zentralblock (7) einerseits und/oder an den Gehäusen (5,6) andererseits befestigt sind.

2. Betätigungsvorrichtung nach Anspruch 1, dadurch gekennzeichnet,

— daß der Zentralblock (7) im wesentlichen vollständig von dem Befestigungsgehäuse (5) einerseits und von dem Griffgehäuse (6) andererseits umschlossen ist.

3. Betätigungsvorrichtung nach Anspruch 1 oder 2, insbesondere für pneumatisch zu betätigende Verstellelemente, dadurch gekennzeichnet,

— daß alle Schaltelemente in den Zentralblock integriert sind.

4. Betätigungsvorrichtung nach einem der vorhergehenden Ansprüche, dadurch gekennzeichnet,

— daß das Griffgehäuse gegebenenfalls mit seiner Griffgehäuse-Achse relativ zum Zentralblock in Richtung der Griffgehäuse-Achse verschiebbar ist.

## Claims

1. Actuating device for a vehicle seat with a plurality of adjustment elements to be actuated electrically and/or pneumatically, characterised in that

— the actuating device has a central block (7) which, with one of its parts, projects into a fastening housing (5) and, with another of its parts, projects into a handle housing (6),

— the central block (7) is mounted on a central-block axis (9) which is located in the fastening housing (5) and along which the central block is able to be displaced in the axial direction in relation to the fastening housing and is able to be pivoted around the central-block axis,

— the handle housing (6) is mounted on a handle-housing axis (11) around which it can be pivoted and which is fastened to the central block perpendicular to the central-block axis, and

— the currently involved movement, which the handle housing can undergo in relation to the central block and/or which the central block can undergo in relation to the fastening housing, has an electrical or pneumatic switching element allocated to it, these elements being affixed to the central block (7) on the one hand and/or to the housings (5, 6) on the other hand.

2. The actuating device according to Claim 1, characterised in that

— the central block (7) is substantially completely surrounded by the fastening housing (5) on the one hand and by the handle housing (6) on the other hand.

3. The actuating device according to Claim 1 or 2, particularly for pneumatically actuated adjustment elements, characterised in that

— all the switching elements are integrated into the central block (7).

4. The actuating device according to any one of the preceding Claims, characterised in that

— the handle housing, optionally together with its handle-housing axis, can be displaced in the direction of its handle-housing axis relative to the central block.

## Revendications

1. Dispositif de commande pour un siège de véhicule comprenant plusieurs éléments de réglage à actionnement électrique et/ou pneumatique, caractérisé en ce que :

— le dispositif de commande comporte un bloc central (7) qui s'engage, par l'une de ses parties, dans un corps de fixation (5) et, par une autre partie, dans un corps de retenue (6) ;

— le bloc central (7) est monté sur un axe de bloc central (8) disposé dans le corps de fixation (5) et sur lequel le bloc central est susceptible de glisser en direction axiale par rapport au corps de fixation et de pivoter par rapport à l'axe de bloc central ;

— le corps de retenue (6) est monté sur un axe de corps de retenue (11) et est susceptible de pivoter autour de celui-ci qui est fixé sur le bloc central (7) perpendiculairement à l'axe de bloc central ;

— pour chaque déplacement relatif du corps de retenue par rapport au bloc central et/ou du bloc central par rapport au corps de fixation, sont prévus des éléments de commutation ou éléments logiques, électriques ou pneumatiques, qui sont fixés, d'une part, au bloc central (7) et/ou aux corps ou carters (5, 6), d'autre part.

2. Dispositif de commande selon la revendication 1, caractérisé en ce que le bloc central (7) est entouré presque complètement, d'une part, par le corps de fixation (5) et, d'autre part, par le corps de retenue (6).

3. Dispositif de commande selon la revendication 1 ou 2, en particulier pour des éléments de réglage à actionnement pneumatique, caractérisé en ce que tous les éléments de commutation ou éléments logiques sont intégrés dans le bloc central.

4. Dispositif de commande selon l'une des revendications précédentes, caractérisé en ce que le corps de retenue est susceptible, le cas échéant, de glisser par son axe de corps de retenue par rapport au bloc central dans la direction de l'axe de corps de retenue.

Fig. 1

5

7

13

12

14

8

6

19

11

20

Fig. 2

9  5  19  III  11  20  10

III

8

Fig. 3

17  18  7  8  11  6  IV

IV

IV

16  20

Fig. 4

9  15  13  12  14  16  10

8

II

II

II

21  19  11  20  22